Europäisches Patentamt

European Patent Office

Office européen des brevets

(19)

(11) **EP 0 858 833 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(51) Int Cl.⁷: **B01J 23/72**, C07F 7/16, B01J 37/00

(21) Anmeldenummer: **98101269.3**

(22) Anmeldetag: **20.11.1996**

(54) **Katalysatoren auf Kupferbasis, Verfahren zu ihrer Herstellung sowie ihre Verwendung und ein Verfahren zur Herstellung von alkylhalogensilanen**

Copper-based catalysts, process for producing them and their use, and method for preparation of alkylhalogenosylanes

Catalyseur à base de cuivre, procédé pour leur production ainsi que leur emploi et procédé pour la fabrication d'alkylhalogenosilanes

(84) Benannte Vertragsstaaten:
**DE ES FR GB NL**

(30) Priorität: **01.12.1995 DE 19544748**
**11.05.1996 DE 19619161**

(43) Veröffentlichungstag der Anmeldung:
**19.08.1998 Patentblatt 1998/34**

(62) Dokumentnummer(n) der früheren Anmeldung(en) nach Art. 76 EPÜ:
**96118554.3 / 0 776 697**

(73) Patentinhaber:
• **GE Bayer Silicones GmbH & Co. KG**
  **40699 Erkrath (DE)**
• **NORDDEUTSCHE AFFINERIE AG**
  **20539 Hamburg (DE)**

(72) Erfinder:
• **Langner, Bernd, Dr.**
  **21423 Winsen/Luhe (DE)**
• **Stantke, Peter**
  **21641 Apensen (DE)**
• **Leister, Thomas**
  **23560 Lübeck (DE)**
• **Steiner, Matthias-Sven, Dr.**
  **51373 Leverkusen (DE)**
• **Degen, Bruno, Dr.**
  **53804 Much (DE)**
• **Schartau, Wolfgang, Dr.**
  **51379 Leverkusen (DE)**
• **Licht, Elke, Dr.**
  **51381 Leverkusen (DE)**

(56) Entgegenhaltungen:
GB-A- 2 153 697          US-A- 4 218 387
US-A- 4 504 597          US-A- 4 520 130
US-A- 4 864 044

EP 0 858 833 B1

**Beschreibung**

Die Erfindung betrifft Katalysatoren auf Kupferbasis, Verfahren zu ihrer Herstellung sowie ihre Verwendung und ein Verfahren zur Herstellung von Alkylhalogensilanen in Gegenwart dieser Katalysatoren. Eine Vielzahl von Kupferkatalysatoren sind in den letzten 50 Jahren für die Umsetzung von gemahlenem Silicium mit Alkylhalogenid zu Alkylhalogensilanen (Rochow-Synthese; z.B. US-A 2 380 995) vorgeschlagen worden. So wurden zwischen 1940 und etwa 1980 u.a. neben Mischungen aus metallischem Kupfer und $Cu_2O/CuO$ (DE-A 3 501 085), $Cu_2Cl_2$, $CuCl_2$ (US-A 4 762 940), Kupferformiat (US-A 4 487 950) auch sehr feine hydrometallurgische aus Kupferlösungen durch Zusatz von Eisen gefällte Zementate eingesetzt, die zum Teil noch nachoxidiert wurden (siehe z.B. US-A 2 420 540). Da die Zementate meist aus Laugen oxidischer Kupfererze hergestellt wurden und die Zementation und eventuelle Nachoxidation nur schwer zu kontrollieren waren, gab es immer wieder Schwierigkeiten, eine reproduzierbare katalytische Aktivität für die Silansynthese sicherzustellen.

Daher und weil diese Art von oxidiertem Kupfer in den 70er Jahren kaum noch verfügbar war, wurde nach anderen Quellen für oxidierte Kupferkatalysatoren gesucht Grundsätzlich können als Ausgangsmaterial für die Oxidation sowohl Elektrolytkupfer, verdüste Kupferpulver oder chemisch gefällte Kupferpulver dienen, oder es werden grobere Kupferstücke eingesetzt. Zur Verstärkung der Wirkung werden zusätzlich Metalle oder Metallverbindungen in Konzentrationen von 0,1 bis 10 % dem Kupferkatalysator oder seinen Vorstufen zugesetzt. Neben Zink oder Zinkverbindungen, Aluminium bzw. Aluminiumverbindungen wird dem Zinn hier eine wichtige Rolle zugeschrieben. So enthalten die Katalysatoren meist zwischen 400 und 3 000 ppm Zinn. Neben den Promotoren gibt es jedoch auch Katalysatorengifte wie Blei, deren Konzentration daher unter 100 ppm liegen sollte.

In allen Fällen wird das ursprüngliche Kupfermaterial bzw. die Legierung durch pyrometallurgische Oxidation (US-A 4 520 130 und US-A 4 504 597) in Luft oder bei geringen Sauerstoffpartialdrücken (US-A 4 218 387) zu einem Gemisch von Kupfer und seinen Oxiden oxidiert. Dabei ist es für die Wirksamkeit wichtig, bestimmte Gehalte an Kupfer (ca. 2 bis 30 %), Kupfer(I)oxid (ca. 30 bis 70 %) und Kupfer(II)oxid (ca. 10 bis 30 %) einzustellen. Bei der Oxidation der nicht durch Zementation gewonnenen Kupfer-Katalysatoren muß jedoch, um eine gute katalytische Wirkung zu erzielen, das Pulver durch energiereiche Mahlung auf hohe BET-Oberflächen von über 1 $m^2$/g und sehr geringe Korngrößen von etwa 2 bis 7 µm gebracht werden. Kristallgitterstörungen unterstützen bekanntermaßen die katalytische Aktivität (siehe US-A 4 520 130 und US-A 4 504 597).

Der beim Hochenergiemahlen anfallende hohe Energieverbrauch führt zum einem zu hohen Produktionskosten, darüber hinaus entstehen auch mittelbar hohe Kosten, da die eingesetzten Apparaturen einem hohem Verschleiß unterliegen. Auch in chemischer Hinsicht sind die beschriebenen Verfahren nachteilig, da die geringen Teilchengrößen des Katalysators bei einem Einsatz im Fließbettreaktor dazu führen, daß die Katalysatorpartikel relativ schnell aus dem Reaktor ausgetragen werden und somit nicht mehr für den Katalysevorgang zur Verfügung stehen. Es muß somit entweder ein schlechtes Katalyseergebnis hingenommen werden oder es müssen entsprechend hohe Katalysatoranteile bereitgestellt werden, was ebenfalls die Kosten erhöht. Der Verschleiß beim Hochenergiemahlen führt darüber hinaus zu Substanzverunreinigungen durch Abrieb.

Die US 4218387 beschreibt Kupferkatalysatoren, die durch Oxidation von Kupferpulver bei reduziertem Sauerstoffpartialdruck gebildet werden.

Die Aufgabe der vorliegenden Erfindung war die Bereitstellung von Katalysatoren auf Kupferbasis, mit einer geringen BET-Oberfläche, die ohne eine Reduzierung der Teilchengröße mittels Hochenergievermahlung herstellbar sind, und die mit beliebig wählbaren Anteilen an Dotierungselementen einfach herstellbar sind. Zudem sollten die erfindungsgemäßen Katalysatoren in Rochow-Prozeß zur Herstellung von Alkylhalogensilanen einsetzbar sein. Die dafür gegebenenfalls notwendigen Promotoren sollten vorzugsweise in den kupferhaltigen Katalysatoren enthalten sein, um aufwendigen Dosierungen und Mischungen vor Eintritt in den Rochow-Reaktor zu vermeiden.

Es wurde nun gefunden, daß die erfindungsgemäßen Katalysatoren auf Kupferbasis; mit der im Anspruch 1 angegebenen Zusammensetzung, erhältlich durch Verdüsen von geschmolzenem metallischen Kupfer in einem Aufnahmemedium, wobei das Aufnahmemedium eine Temperatur aufweist, die geringer als die Schmelztemperatur des Kupfers ist, nachfolgende Isolierung der verfestigten Kupferpartikel und deren Oxidation diese Aufgabe erfüllen.

Gegenstand der vorliegenden Erfindung ist daher ein Katalysator auf Kupferbasis nach Anspruch 1, erhältlich durch Verdüsen von geschmolzenem metallischen Kupfer in einem Aufnahmemedium, wobei das Aufnahmemedium eine Temperatur aufweist, die geringer als die Schmelztemperatur des Kupfers ist, nachfolgende Isolierung der verfestigten Kupferpartikel und deren Oxidation.

Durch die Verdüsung des metallischen Kupfers wird eine Gestalt der sich ausbildenden Kupferpartikel bereitgestellt, die nach der Durchführung des Oxidationsvorganges einen hochaktiven Katalysator zur Folge hat. Es ist nicht erforderlich, den Katalysator auf sehr kleine Partikelgrößen mit Kristallgitterstörung durch Hochenergiemahlung zu zerkleinern, sondern in der Regel kann der Katalysator bereits in der durch das Verfahren bereitgestellten Form verwendet werden. Gegebenenfalls kann durch Absiebung oder anderweitige Abtrennung eine Selektion der weiterzuverwendenden Teilchen erfolgen. Ebenfalls kann bei parasitär stattfindenden Agglomerationsvorgängen eine anschließende Zerkleinerung, insbesondere eine Deagglomeration erfolgen, um eine genügend gute Vermischung mit den zu katalysierenden Substanzen bereitzustellen und die Ausbeute zu erhöhen. Die bereitgestellte relativ große Korngröße des Katalysators macht diesen vor allem hervorragend für einen Einsatz im Bereich von Fließbettreaktoren geeignet.

Für die Verdüsung eignet sich sowohl ein flüssiges als auch ein gasförmiges Aufhahmemedium.

Im Hinblick auf die nach der Verdüsung durchzuführende Oxidation hat es sich als vorteilhaft erwiesen, daß das Aufnahmemedium Wasser ist.

Das flüssige Aufnahmemedium können jedoch auch Öle, beispielsweise Paraffinöle oder Silikonöle, einzeln oder im Gemisch oder auch gemeinsam mit Wasser sein.

Als gasförmiges Aufnahmemedium ist Luft, Wasserdampf, Sauerstoff, Stickstoff und/oder ein Edelgas bevorzugt. Besonders bevorzugt ist Luft oder Wasserdampf.

Der Druck bei der Verdüsung und die Düsengröße werden zweckmäßiger Weise so eingestellt, daß mindestens 50 % der bei der Verdüsung entstehenden Kupferpartikel eine Korngröße ($d_{50}$) von kleiner als 100 Mikrometer aufweisen.

Eine Verdüsung in dem flüssigen Aufnahmemedium erfolgt vorzugsweise mit einem Verdüsungsdruck von 50 bis 500 bar. Besonders bevorzugt sind hier 50 bis 300 bar.

Eine Verdüsung in gasförmigem Aufnahmemedium erfolgt vorzugsweise bei einem Verdüsungsdruck von 0,1 bis 15 bar, bevorzugt 6 bis 12 bar.

Als metallisches Kupfer ist Elektrolytkupfer mit einem Bleigehalt kleiner als 100 ppm, bevorzugt kleiner als 40 ppm, bevorzugt. Ebenso werden Kupferlegierungen bevorzugt.

Als Kupferlegierungen sind dabei Legierungen bevorzugt, die mindestens eines der Elemente Zinn, Zink, Aluminium, Eisen, Antimon, Arsen, Phosphor, der Alkali und/oder Erdalkalimetalle, elementar oder in Form ihrer Verbindungen aufweisen.

Verbindungen sind beispielsweise Legierungen, Metallphosphide oder Metallsilicide.

Im Falle der Dotierungen mit Alkali- und/oder Erdalkalimetallen beträgt die Menge vorzugsweise 1 bis 10 000 ppm. Im Falle der restlichen Dotierungselemente beträgt die Menge 1 bis 3 000 ppm, bevorzugt bis 800 ppm je Element.

Bei einer Verdüsung in einem gasförmigen Medium erfolgt vorzugsweise ein Zusatz von 1 bis 10 000 ppm eines oder mehrerer Elemente aus der Gruppe der Alkali- und/oder Erdalkalimetalle. Unmittelbar nach einer Gasverdüsung weisen die austretenden Teilchen aus geschmolzenem Metall eine sehr irreguläre Gestalt auf, die sich bei einem unlegierten Kupferkatalysator nach einiger Zeit einer Kugelform annähert. Durch die oben beschriebenen Zusätze bildet sich jedoch bereits kurz nach einem Austritt der Partikel aus der Düse eine Oxidschicht auf dem geschmolzenen Metall, die die vorliegenden Gestaltung stabilisiert und einen Übergang zur Kugelform verhindert, obwohl innerhalb der oxidischen Hülle noch längere Zeit flüssiges Metall enthalten ist.

Das Aufschmelzen des Kupfers oder der Kupferlegierung erfolgt vorzugsweise im Induktionsofen. Nach der Verdüsung im flüssigen Medium wird das entstehende Kupferpulver vorzugsweise zunächst getrocknet und anschließend dem Oxidationsprozeß zugeführt. Die Oxidation kann beispielsweise in einem indirekt elektrisch beheizten Drehrohrofen, in einem Rührreaktor oder in einer Wirbelschicht erfolgen. Zweckmäßige Temperaturbereiche liegen zwischen 100°C und 1 000°C, bevorzugt zwischen 300°C und 900°C und insbesondere vorteilhaft zwischen 400°C und 800°C.

Als Verweilzeiten für die Durchführung der Oxidation haben sich Werte im Intervall von 5 bis 120 Minuten als zweckmäßig erwiesen. Vorteilhaft sind insbesondere Werte im Bereich von 10 bis 90 Minuten.

Die Randbedingungen des Oxidationsvorganges werden bevorzugt derart vorgegeben, daß der Oxidationsvorgang derart durchgeführt wird, daß der Katalysator 0 bis 30 %, vorzugsweise 0,5 bis 20 %, metallisches Kupfer, 30 bis 90 %, vorzugsweise 40 bis 80 %, Kupfer(I)oxid, vorzugsweise 10 bis 60 %, bevorzugt 30 bis 50 %, Kupfer(II)oxid aufweist Alle Prozentangaben beziehen sich dabei auf Gewichtsprozent.

Ein typischer Oxidationsvorgang kann dadurch charakterisiert werden, daß der Oxidationsvorgang mit mindestens teilweiser Sinterung durchgeführt wird.

Die BET-Oberfläche dieses erfindungsgemäßen Katalysators beträgt vorzugsweise 0,05 bis 1 $m^2$/g, besonders bevorzugt 0,05 bis 0,5 $m^2$/g, gemessen mit einem FlowSorb 2/2300 der Firma Micrometrics mit $N_2$, als zu adsorbierendes Agens.

Die Wirksamkeit des Katalysators kann weiter dadurch erhöht werden, daß dem Oxidationsvorgang lediglich zuvor separierte Kupferpartikel mit einem mittleren Teilchendurchmesser zwischen 1 und 200 Mikrometer zugeführt werden. Durch diesen Abscheidevorgang werden Partikel mit relativ zur Oberfläche hohem Volumenanteil abgesondert

Eine weitere Verbesserung kann dadurch erfolgen, daß der mittlere Teilchendurchmesser ≤100 Mikrometer gewählt wird.

Bei typischerweise vorliegenden Anwendungsanforderungen hat es sich als zweckmäßig erwiesen, daß für den mittleren Teilchendurchmesser ein Wert im Intervall von 10 bis 80 Mikrometer gewählt wird.

Eine Anpassung des mitteleren Teilchendurchmessers an die vorgesehenen Einsatzbedingungen erfolgt dadurch, daß mindestens agglomerierte Teile des mindestens partiell oxidierten Kupfers zerkleinert werden.

Zur Durchführung des Zerkleinerungsvorgangs ist es möglich, daß die Zerkleinerung in einer nicht schwingenden Kugelmühle durchgeführt wird.

Eine andere Möglichkeit zur Durchführung der Zerkleinerung besteht darin, daß die Zerkleinerung in einer nicht schwingenden Hammermühle durchgeführt wird.

In einer bevorzugten Ausführungsform der Erfindung wird der Oxidationsvorgang mit mindestens teilweiser Sinterung durchgeführt.

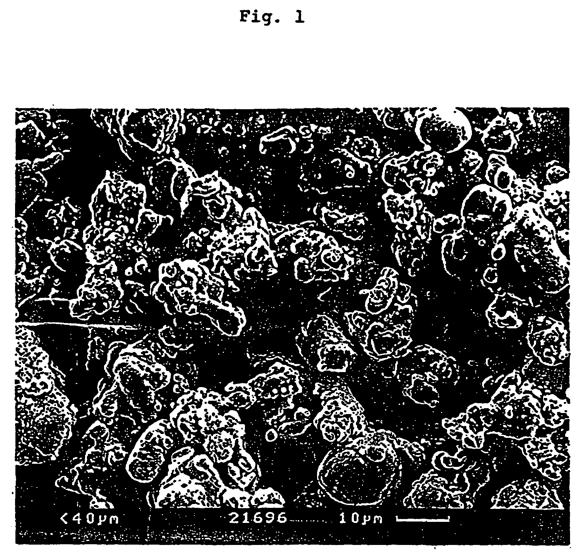

In einer bevorzugten Ausführungsform der Erfindung weist der Katalysator eine BET-Oberfläche zwischen 0,05 und kleiner als 0,5 m$^2$/g und einen mittleren Teilchendurchmesser zwischen 1 und 200 µm auf und verfügt zumindest vor einer Oxidation des als Ausgangssubstannz verwendeten metallischen Kupfers über eine spratzige (irreguläre) Oberfläche (siehe Fig. 1).

Die charakteristische Gestaltung einer spratzigen Oberflächenstruktur wird im Handbuch "Metals Handbook, 9th Edition, Volume 7, Powder Metallurgy, American Society for Metals, im Abschnitt Copper Powder/107, Copper Powder/117, sowie im Kapitel Particle Shape Analysis" beschrieben.

In Fig. 1 ist eine derartige spratzige Oberfläche des erfindungsgemäßen Katalysators dargestellt. Es ist erkennbar, daß die räumlichen Gebilde Durchmesser im Bereich von 1 bis 20 µm aufweisen und teilweise aneinander haften.

In einer weiteren ebenfalls bevorzugten Ausführungsform der Erfindung weist der Katalysator auf Kupferbasis für x Werte kleiner 0.3 auf.

Der erfindungsgemäße Katalysator weist folgende Indizes auf:

x = 0 bis 0,3, bevorzugt 0,005 bis 0,2
y = 0,2 bis 0,9, bevorzugt 0,4 bis 0,8 und
z = 0,1 bis 0,6, bevorzugt 0,3 bis 0,5,

wobei die Summe aus x + y + z immer 1 ergibt.

Für den Fall, daß in dem erfindungsgemäßen Katalysator x kleiner als 1,0 ist (Oxidation), liegt eine im Vergleich zum nahezu nicht oder vollständig nicht-oxidierten Katalysator veränderte Oberflächenstruktur vor.

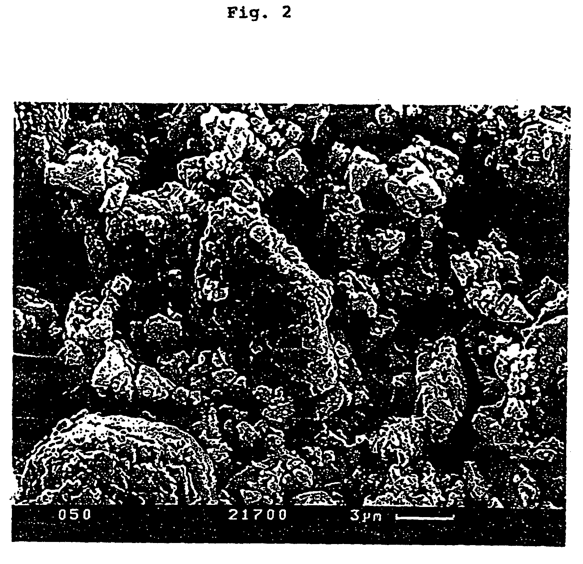

Fig. 2 zeigt die Oberflächenstruktur nach der Durchführung des Oxidationsvorganges. Es ist erkennbar, daß nach der Durchführung des Oxidationsvorganges eine komplexe Oberflächenstruktur vorliegt, in der eine Vielzahl unterschiedlich dimensionierter Oberflächen kristallartig ineinander übergeleitet sind. Gegenüber einem Hochenergiemahlen wird somit in einem sehr großen Oberflächenbereich eine gleichmäßige Ausbildung bereitgestellt, bei der schalenartig metallisches Kupfer, Kupfer(I)oxid sowie Kupfer(II)oxid aufeinander angeordnet sind. Die jeweiligen Schichtdicken sowie die Festigkeiten der Haftungen der Schichten aufeinander sind im überwiegenden Bereich der Katalysatorausdehnung sehr ähnlich.

Die Bereitstellung einer speziellen geometrischen Struktur der Oberflächenbereiche der Katalysatoren auf Kupferbasis stellt einen wesentlichen Gegenstand der vorliegenden Erfindung dar.

Gegenstand der Erfindung ist zudem ein Verfahren zur Herstellung eines oxidischen Katalysators auf Kupferbasis, wonach geschmolzenes metallisches Kupfer in einem Aufnahmemedium verdüst wird, wobei das Aufnahmemedium eine Temperatur aufweist, die geringer ist als die Schmelztemperatur des Kupfers, die verfestigten Kupferpartikel isoliert und anschließend oxidiert werden.

Für das erfindungsgemäße Verfahren gelten die für den mittels Verdüsung erhaltenen Katalysator angegebenen Parameter.

Gegenstand der Erfindung ist zudem ein Verfahren zur Herstellung von Alkylhalogensilanen durch Umsetzung von Silicium mit Alkylhalogeniden bei Temperaturen zwischen 250 und 380°C, wonach der erfindungsgemäße Katalysator und gegebenenfalls weitere Promotoren eingesetzt werden.

Als Silicium im Sinne der Erfindung kann Silicium mit einer Reinheit >95 % eingesetzt werden. Bevorzugt wird Silicium mit einer Reinheit >98 % verwendet. Die durchschnittliche Teilchengröße des eingesetzten Silicium kann dabei beliebig gewählt werden, beträgt aber vorzugsweise zwischen 50 und 500 um.

Als Alkylhalogenide im Sinne der Erfindung werden alle gängigen $C_1$-$C_8$-Alkylhalogenide eingesetzt, bevorzugt Methylchlorid, Ethylchlorid, Propylchlorid etc., besonders bevorzugt Methylchlorid.

Selbstverständlich wird durch den Einsatz des erfindungsgemäßen Katalysators die Anwendung anderer bekannter Promotorsubstanzen, wie z.B. Zink oder Zinkverbindungen, Phosphor oder Phosphorverbindungen, Aluminium- oder Aluminiumverbindungen oder Zinn- oder Zinnverbindugen, alleine oder in Kombination, nicht ausgeschlossen.

Bevorzugt werden Zinn, Phosphor oder Zink, alleine oder in Kombination, in elementarer Form oder in Form ihrer Verbindungen eingesetzt.

Der Begriff Verbindungen schließt dabei Legierungen mit ein.

Der erfindungsgemäße Kupferkatalysator wird dabei vorzugsweise in einer Menge von 0,05 bis 10 Gew.-%,

besonders bevorzugt 0,5 bis 7 Gew.-%, bezogen auf Silicium, eingesetzt.

Das Verfahren wird üblicherweise in dem für die Rochow-Synthese gängigen Temperatur- und Druckbereich durchgeführt.

Bevorzugt ist dabei eine Temperatur zwischen 280 und 390°C und ein Druck von 1 bis 10 bar.

Das erfindungsgemäße Verfahren ist auch nicht auf eine bestimmte Verfahrenstechnik bei der Direktsynthese beschränkt. So kann die Reaktion diskontinuierlich oder kontinuierlich geführt werden, und es kann sowohl im Fließbett, im Rührbett als auch im Festbett gearbeitet werden.

Gegenstand der Erfindung ist zudem die Verwendung des erfindungsgemäßen Katalysators bei der Herstellung von Alkylhalogensilanen.

Ein weiterer Vorteil des erfindungsgemäßen Katalysators besteht darin, daß die katalytische Wirksamkeit relativ unabhängig vom tatsächlichen Kupfergehalt ist.

Die vorstehend und nachfolgend angegebenen Anteile der Promotoren, beispielsweise die Anteile von Zinn, beziehen sich auf eine meßtechnische Ermittelung mit Hilfe der Massenspektrometrie bei ICP-MS, ermittelt mit dem Gerät Elan 500 der Fa. Perkin Elmer, und Atomemissionsspektrometrie (ICP/AES), ermittelt mit dem Gerät Optimal 3000 der Fa. Perkin Eimer.

Das Verhältnis der einzelnen Kupferphasen wurde röntgendiffraktometrisch mittels Diffraktometer D 5000 der Fa. Siemens ermittelt.

Der mittlere Teilchendurchmesser wurde mit einem Malvern Master Sizer mittels Laserbeugung ermittelt

Die nachfolgenden Beispiele sollen die vorliegende Erfindung näher illustrieren, sind aber keineswegs einschränkend zu verstehen.

### Ausführungsbeispiele

Bezüglich des Einsatzes der erfindungsgemäßen Katalysatoren in der Rochow-Synthese wurden die folgenden Experimente in einem Rührbettreaktor aus Glas, innerer Durchmesser = 30 mm, der mit einem Spiralrührer ausgestattet ist, durchgeführt. Zum Einsatz kam ein Silicium mit einer Reinheit von mindestens 98,8 % und mit einer Korngrößenverteilung von 71 bis 160 μm.

Die Kontaktmasse bestand aus 40 g Silicium, 3,2 g des in den nachfolgenden Tabellen näher beschriebenen Kupferkatalysators und 0,05 g ZnO und wurde vor dem Einsatz homogenisiert.

Methylchlorid wurde unter einem Druck von 2 bar von unten über eine Glasfritte durch die Kontaktmasse geleitet. Der Durchsatz an Methylchlorid wurde konstant gehalten und betrug in allen Fällen ca. 1,8 l/h. Nach Durchlaufen der Induktionsphase wurde eine stationäre Versuchsphase bei 300°C eingestellt. Unter diesen Bedingungen wurde die Menge an gebildetem Rohsilan pro Zeiteinheit bestimmt. Die Emittlung der Einzelbestandteile erfolgte gaschromatographisch.

Die angegebenen Werte sind Mittelwerte aus jeweils vier Einzelbestimmungen, jeder Versuch wurde mindestens einmal reproduziert.

### Beispiel 1

Zur Herstellung des Kupferkatalysators wurde Elektrolytkupfer in einem Induktionsofen geschmolzen, mit Zinn legiert und mit Wasser bei einem Wasserdruck von 300 bar verdüst. Das Pulver wurde getrocknet, Anteile mit einem durchschnittlichen Durchmesser <40 μm abgetrennt und bei einer Temperatur von 430°C bis zu der in der Tabelle 1 angegebenen Zusammensetzung oxidiert.

Für den Einsatz im Rührbett-Reaktor wurde Silicium der oben allgemein beschriebenen Spezifikation mit 0,5 % Fe, 950 ppm Al, 480 ppm Ca und 230 ppm Ti sowie der oben beschriebene Kupferkatalysator eingesetzt.

In Tabelle 1 sind charakteristische analytische Daten des Kupferkatalysators sowie das Ergebnis der unter Verwendung der entsprechenden kupferhaltigen Katalysatoren durchgeführten Rochow-Synthese angegeben.

Im Vergleichsbeispiel, das in der letzten Zeile der Tabelle 1 angegeben ist, wurde Silicium der oben beschriebenen Spezifikation in Kombination mit einem Kupferkatalysator gemäß EP-A 182 814 mit im Vergleich dazu vermindertem Zinngehalt eingesetzt.

## Tabelle 1

| Versuch | Cu [%] | Cu2O [%] | CuO [%] | Sn [ppm] | Fe [ppm] | Pb [ppm] | BET [m2/g] | Prod.-Rate [g/h] | MeH [%] | Di [%] | Tri/Di |
|---|---|---|---|---|---|---|---|---|---|---|---|
| 1 | 14 | 71 | 15 | 120 | 240 | 50 | 0.8 | 7.6 | 1.9 | 91.6 | 0.044 |
| 2 | 13 | 72 | 15 | 160 | 330 | 53 | 1.0 | 7.5 | 1.8 | 91.8 | 0.043 |
| 3 | 13 | 74 | 13 | 190 | 510 | 83 | 1.3 | 7.8 | 1.4 | 91.8 | 0.045 |
| 4 | 17 | 66 | 17 | 250 | 70 | 7 | 0.8 | 7.2 | 1.2 | 92.3 | 0.041 |
| 5 | 9 | 65 | 26 | 270 | 70 | 4 | 0.8 | 7.3 | 1.7 | 91.7 | 0.041 |
| 6 | 1 | 72 | 27 | 62 | 20 | 11 | 1.4 | 7.7 | 1.9 | 91.7 | 0.044 |
| 7 | 1 | 71 | 28 | 160 | 230 | 10 | 1.5 | 8.4 | 1.4 | 92.6 | 0.041 |
| 8 | 18 | 52 | 30 | 230 | <20 | 9 | 0.2 | 6.6 | 1.5 | 92.2 | 0.043 |
| 9 | 18 | 55 | 27 | 74 | <20 | 9 | 1.0 | 6.2 | 1.6 | 90.7 | 0.053 |
| 10 | 17 | 50 | 33 | 73 | <20 | 9 | 0.4 | 6.6 | 1.7 | 91.0 | 0.048 |
| 11 | 24 | 28 | 48 | 170 | 110 | 8 | 0.3 | 7.0 | 1.4 | 90.8 | 0.052 |
| 12 | 23 | 31 | 46 | 160 | 130 | 9 | 1.0 | 7.9 | 1.3 | 90.6 | 0.056 |
| 13 | 26 | 32 | 42 | - | 130 | 7 | 0.5 | 7.0 | 1.4 | 89.9 | 0.059 |
| 14 | 21 | 35 | 44 | 97 | 160 | 67 | 0.3 | 6.0 | 1.6 | 91.1 | 0.051 |
| 15 | 22 | 39 | 39 | 490 | 160 | 66 | 1.0 | 6.7 | 1.5 | 91.2 | 0.049 |
| 16 | 23 | 40 | 37 | 82 | 170 | 66 | 0.4 | 6.4 | 1.4 | 91.8 | 0.045 |
| Vergleich | 18 | 51 | 31 | 110 | 70 | 100 | 2.0 | 5.0 | 2.1 | 88.5 | 0.069 |

EP 0 858 833 B1

**Beispiel 2**

Zur Herstellung des Kupferkatalysators wurde Elektrolytkupfer in einem Induktionsofen geschmolzen, mit Zinn legiert und mit Wasser bei einem Wasserdruck von 300 bar verdüst. Das Pulver wurde getrocknet, Anteile mit einem durchschnittlichen Teilchendurchmesser <40 µm abgetrennt und bei einer Temperatur von 430°C bis zu der in der Tabelle 1 angegebenen Zusammensetzung oxidiert.

Für den Einsatz in Rochow-Reaktor wurde Silicium der oben allgemein Beschriebenen Spezifikation mit 0,45 % Fe, 0,21 % Al, 540 ppm Ca und 230 ppm Ti sowie der oben beschriebene Kupferkatalysator eingesetzt.

In Tabelle 2 sind charakteristische analytische Daten des Kupferkatalysators sowie das Ergebnis der unter Verwendung der entsprechenden kupferhaltigen Katalysatoren durchgeführten Rochow-Synthese angegeben.

Im Vergleichsbeispiel, das in der letzten Zeile der Tabelle 2 angegeben ist, wurde Silicium der oben beschriebenen Spezifikation in Kombination mit einem Kupferkatalysator gemäß EP-A 182 814 mit im Vergleich dazu vermindertem Zinngehalt eingesetzt.

**Tabelle 2**

| Versuch | Cu [%] | Cu2O [%] | CuO [%] | Sn [ppm] | Fe [ppm] | Pb [ppm] | BET [m2/g] | Prod.-Rate [g/h] | MeH [%] | Di [%] | Tri/Di |
|---|---|---|---|---|---|---|---|---|---|---|---|
| 17 | 11 | 24 | 65 | 510 | 180 | 74 | 0.2 | 6.7 | 2.1 | 91.0 | 0.049 |
| 18 | 44 | 18 | 38 | 690 | 870 | 85 | 0.4 | 7.8 | 1.2 | 91.6 | 0.048 |
| 19 | 26 | 61 | 18 | 520 | <20 | 6 | 0.7 | 8.0 | 1.3 | 92.2 | 0.043 |
| 20 | 22 | 58 | 20 | 570 | 40 | 7 | 0.7 | 8.2 | 1.6 | 91.6 | 0.045 |
| Vergleich | 18 | 51 | 31 | 110 | 70 | 100 | 2.0 | 6.4 | 2.3 | 87.2 | 0.077 |

EP 0 858 833 B1

EP 0 858 833 B1

**Patentansprüche**

1. Katalysatoren auf Kupferbasis der Zusammensetzung
   $Cu_x(Cu_2O)_y(CuO)_z$ mit

$$x = 0 - 0,3$$

$$y = 0,2 - 0,9$$

$$z = 0.1 - 0,6 \text{ und } x+y+z=1,$$

   erhältlich durch Verdüsen von geschmolzenem metallischen Kupfer in einem Aufnahmemedium, wobei das Aufnahmemedium eine Temperatur aufweist, die geringer als die Schmelztemperatur des Kupfers ist, Isolierung der verfestigten Kupferpartikel und deren Oxidation.

2. Katalysatoren auf Kupferbasis nach Anspruch 1, **dadurch gekennzeichnet, daß** das metallische Kupfer elektrolytisch hergestelltes Kupfer ist.

3. Katalysatoren auf Kupferbasis nach Anspruch 1 oder 2, **dadurch gekennzeichnet, daß** das Aufnahmemedium Wasser und/oder Öl ist.

4. Katalysatoren auf Kupferbasis nach Anspruch 1 oder 2, **dadurch gekennzeichnet, daß** das Aufnahmemedium Luft, Wasserdampf, Sauerstoff, Stickstoff und/oder ein Edelgas ist.

5. Katalysatoren auf Kupferbasis nach einem der Ansprüche 1 bis 4, **dadurch gekennzeichnet, daß** diese mit mindestens einem der Elemente ausgewählt aus der Gruppe Zinn, Zink, Aluminium, Eisen, Antimon, Arsen, Phosphor, der Alkali- und/oder Erdalkalimetalle, elementar oder in Form ihrer Verbindungen dotiert sind.

6. Katalysatoren auf Kupferbasis nach einem der Ansprüche 1 bis 5, **dadurch gekennzeichnet, daß** die BET-Oberfläche 0,05 bis 1 $m^2$/g beträgt.

7. Katalysatoren auf Kupferbasis nach einem der Ansprüche 1 bis 6, **dadurch gekennzeichnet, daß** diese zumindest vor einer Oxidation des als Ausgangssubstanz verwendeten metallischen Kupfers über eine spratzige Oberfläche verfügen.

8. Katalysatoren auf Kupferbasis nach einem der Ansprüche 1 bis 7, **dadurch gekennzeichnet, daß** sie eine BET-Oberfläche zwischen 0,05 und kleiner als 0,5 $m^2$/g und einen mittleren Teilchendurchmesser zwischen 1 und 200 µm aufweisen.

9. Katalysatoren auf Kupferbasis nach einem der Ansprüche 1 bis 8, **dadurch gekennzeichnet, daß** diese 1 bis 3 000 ppm Zinn und/oder 1 bis 3 000 ppm Zink enthalten.

10. Katalysator auf Kupferbasis nach einem der Ansprüche 1 bis 9, **dadurch gekennzeichnet, daß** der mittlere Teilchendurchmesser 1 bis 200 Mikrometer beträgt.

11. Verfahren zur Herstellung eines oxidischen Katalysators auf Kupferbasis nach irgend einem der Ansprüche 1 bis 10, **dadurch gekennzeichnet, daß** geschmolzenes metallisches Kupfer in einem Aufnahme-Medium verdüst wird, wobei das Aufnahme-Medium eine Temperatur aufweist, die geringer ist als die Schmelztemperatur des Kupfers und daß die verfestigten Kupferpartikel isoliert und anschließend oxidiert werden.

12. Verfahren nach Anspruch 11, **dadurch gekennzeichnet, daß** die Oxidation bei Temperaturen zwischen 300°C und 900°C durchgeführt wird.

13. Verfahren zur Herstellung von Alkylhalogensilanen durch die Umsetzung von Silicium mit Alkylhalogeniden in Gegenwart mindestens eines Katalysators auf Kupferbasis und gegebenenfalls Promotors bei Temperaturen zwischen 250 und 380°C, **dadurch gekennzeichnet, daß** dieses in Gegenwart eines Katalysators nach einem der Ansprüche 1 bis 10 durchgeführt wird.

14. Verfahren nach Anspruch 13, **dadurch gekennzeichnet, daß** als Promotoren Zinn, Zink, Aluminium, Eisen, Antimon, Arsen, Calcium, Magnesium und/oder Phosphor, zusätzlich zu den im Katalysator auf Kupferbasis vorhandenen Mengen, elementar oder in Form ihrer Verbindungen, eingesetzt werden.

15. Verwendung der Katalysatoren auf Kupferbasis nach einem der Ansprüche 1 bis 10 bei der Herstellung von Alkylhalogensilanen.

**Claims**

1. Copper-based catalysts of the composition $Cu_x(Cu_2O)_y(CuO)_z$ where

$$x = 0 - 0.3$$

$$y = 0.2 - 0.9$$

$$z = 0.1 - 0.6 \text{ and } x+y+z = 1,$$

obtainable by atomizing molten metallic copper in a receiving medium having a temperature which is lower than the melting temperature of the copper, isolating the solidified copper particles and oxidizing same.

2. Copper-based catalysts according to Claim 1, **characterized in that** the metallic copper is electrolytically produced copper.

3. Copper-based catalysts according to Claim 1 or 2, **characterized in that** the receiving medium is water and/or oil.

4. Copper-based catalysts according to Claim 1 or 2, **characterized in that** the receiving medium is air, water vapour, oxygen, nitrogen and/or a noble gas.

5. Copper-based catalysts according to one of Claims 1 to 4, **characterized in that** said catalysts are doped with at least one of the elements selected from the group consisting of tin, zinc, aluminium, iron, antimony, arsenic, phosphorus, the alkali and/or alkaline earth metals, either in elemental form or in the form of their compounds.

6. Copper-based catalysts according to one of Claims 1 to 5, **characterized in that** the BET surface area is 0.05 to 1 $m^2$/g.

7. Copper-based catalysts according to one of Claims 1 to 6, **characterized in that** said catalysts have a spattery surface at least before any oxidation of the metallic copper used as a starting substance.

8. Copper-based catalysts according to one of Claims 1 to 7, **characterized in that** they have a BET surface area between 0.05 and less than 0.5 $m^2$/g and an average particle diameter between 1 and 200 $\mu$m.

9. Copper-based catalysts according to one of Claims 1 to 8, **characterized in that** said catalysts contain 1 to 3000 ppm of tin and/or 1 to 3000 ppm of zinc.

10. Copper-based catalysts according to one of Claims 1 to 9, **characterized in that** the average particle diameter is 1 to 200 micrometers.

11. Process for producing an oxidic catalyst based on copper according to any one of Claims 1 to 10, **characterized in that** the molten metallic copper is atomized in a receiving medium having a temperature which is lower than the melting temperature of the copper and **in that** the solidified copper particles are isolated and subsequently oxidized.

**12.** Process according to Claim 11, **characterized in that** the oxidation is carried out at temperatures between 300°C and 900°C.

**13.** Process for producing of alkylhalosilanes by reacting silicon with alkyl halides in the presence of at least one copper-based catalyst and optionally at least one promoter at temperatures between 250 and 380°C, **characterized in that** said process is carried out in the presence of a catalyst according to one of Claims 1 to 10.

**14.** Process according to Claim 13, **characterized in that** the promoters used are tin, zinc, aluminium, iron, antimony, arsenic, calcium, magnesium and/or phosphorus, in addition to the amounts present in the copper-based catalyst, either in elemental form or in the form of their compounds.

**15.** Use of the copper-based catalysts according to one of Claims 1 to 10 in the production of alkylhalosilanes.

**Revendications**

**1.** Catalyseurs à base de cuivre de composition
$Cu_x(Cu_2O)_y(CuO)_z$ avec

$$x = 0 - 0,3$$

$$y = 0,2 - 0,9$$

$$z = 0,1 - 0,6 \text{ et } x+y+z=1,$$

pouvant être obtenus par atomisation de cuivre métallique fondu dans un milieu récepteur, où le milieu récepteur présente une température qui est inférieure à la température de fusion du cuivre, isolement des particules de cuivre solidifiées et oxydation de celles-ci.

**2.** Catalyseurs à base de cuivre selon la revendication 1 **caractérisés en ce que** le cuivre métallique est du cuivre produit par électrolyse.

**3.** Catalyseurs à base de cuivre selon la revendication 1 ou 2 **caractérisés en ce que** le milieu récepteur est l'eau et/ou une huile.

**4.** Catalyseurs à base de cuivre selon la revendication 1 ou 2 **caractérisés en ce que** le milieu récepteur est l'air, la vapeur d'eau, l'oxygène, l'azote et/ou un gaz noble.

**5.** Catalyseurs à base de cuivre selon l'une des revendications 1 à 4 **caractérisés en ce que** ceux-ci sont dopés avec au moins l'un des éléments choisis dans le groupe de l'étain, du zinc, de l'aluminium, du fer, de l'antimoine, de l'arsenic, du phosphore, des métaux alcalins et/ou alcalino-terreux, sous forme élémentaire ou de leurs composés.

**6.** Catalyseurs à base de cuivre selon l'une des revendications 1 à 5 **caractérisés en ce que** la surface BET est 0,05 à 1 $m^2$/g.

**7.** Catalyseurs à base de cuivre selon l'une des revendications 1 à 6 **caractérisés en ce qu'**ils disposent d'une surface irrégulière au moins avant une oxydation du cuivre métallique utilisé comme substance de départ.

**8.** Catalyseurs à base de cuivre selon l'une des revendications 1 à 7 **caractérisés en ce qu'**ils présentent une surface BET de 0,05 à moins de 0,5 $m^2$/g et un diamètre particulaire moyen de 1 à 200 μm.

**9.** Catalyseurs à base de cuivre selon l'une des revendications 1 à 8 **caractérisés en ce qu'**ils contiennent 1 à 3 000 ppm d'étain et/ou 1 à 3 000 ppm de zinc.

**10.** Catalyseurs à base de cuivre selon l'une des revendications 1 à 9 **caractérisés en ce que** le diamètre particulaire moyen est 1 à 200 µm.

**11.** Procédé de production d'un catalyseur oxydique à base de cuivre selon l'une quelconque des revendications 1 à 10 **caractérisé en ce que** du cuivre métallique fondu est atomisé dans un milieu récepteur, où le milieu récepteur présente une température qui est inférieure à la température de fusion du cuivre et **en ce que** les particules de cuivre solidifiées sont isolées puis oxydées.

**12.** Procédé selon la revendication 11 **caractérisé en ce que** l'oxydation est réalisée à des températures de 300°C à 900°C.

**13.** Procédé de production d'alkylhalogénosilanes par réaction du silicium avec des halogénures d'alkyle en présence d'au moins un catalyseur à base de cuivre et éventuellement d'au moins un promoteur à des températures de 250 à 380°C, **caractérisé en ce qu'**il est mis en oeuvre en présence d'un catalyseur selon l'une des revendications 1 à 10.

**14.** Procédé selon la revendication 13 **caractérisé en ce que** l'étain, le zinc, l'aluminium, le fer, l'antimoine, l'arsenic, le calcium, le magnésium et/ou le phosphore sont utilisés comme promoteurs en plus des quantités présentes dans le catalyseur à base de cuivre, sous forme élémentaire ou de leurs composés.

**15.** Utilisation des catalyseurs à base de cuivre selon l'une des revendications 1 à 10 lors de la production d'alkyl-halogénosilanes.

Fig. 1

Fig. 2